(19) Europäisches Patentamt / European Patent Office / Office européen des brevets

(11) **EP 4 310 729 A1**

(12) **EUROPEAN PATENT APPLICATION**

(43) Date of publication:
**24.01.2024 Bulletin 2024/04**

(21) Application number: **22192012.7**

(22) Date of filing: **24.08.2022**

(51) International Patent Classification (IPC):
**G06N 3/045** *(2023.01)*    **G06N 3/0464** *(2023.01)*
**G06N 3/084** *(2023.01)*    **G06N 3/0895** *(2023.01)*

(52) Cooperative Patent Classification (CPC):
**G06N 3/045; G06N 3/0464; G06N 3/084;
G06N 3/0895**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.07.2022 NL 2032580**

(71) Applicant: **NavInfo Europe B.V.
5657 DB Eindhoven (NL)**

(72) Inventors:
• **GOWDA, Shruthi
5657 DB Eindhoven (NL)**
• **ZONOOZ, Bahram
5657 DB Eindhoven (NL)**
• **ARANI, Elahe
5657 DB Eindhoven (NL)**

(74) Representative: **van Breda, Jacobus
Octrooibureau Los & Stigter B.V.
P.O. Box 20052
1000 HB Amsterdam (NL)**

(54) **METHOD AND SYSTEM FOR INSTILLING SHAPE-AWARENESS TO SELF-SUPERVISED LEARNING DOMAIN**

(57)    A computer-implemented method of self-supervised learning for deep neural networks, the method comprising the steps of:
(i) providing input images (x);
(ii) extracting implicit shape information from the input images; and
(iii) performing self-supervised learning on at least two deep neural network (f) based on the provided input images (x) and the at least one extracted implicit shape information for enabling said at least one deep neural network (f) to classify and/or detect objects within other input images.

**Description**

The invention relates to a computer-implemented method for instilled shape awareness supported self-supervised learning for deep neural networks.

Deep neural networks (DNN) encode patterns in data distribution to produce rich and powerful representations that have resulted in improved generalization performance across various perception tasks. These tasks include, but aren't limited to classification, detection and segmentation. In one example image data can be annotated by means of a DNN to reflect a classification or detected property of, or within, the image. Representations are in essence useful information for classification or prediction in a general sense. Useful information here being any information that allows for the detection of similar properties, such as objects, parts of objects, scenarios, environmental settings, etc., within a plurality of different images. To this end a DNN may be trained through manual assistance, where a user annotates the data so as to provide the DNN with a training set or a correction during learning.

A disadvantage of current networks is that these can be data hungry which makes manually providing annotations both costly and cumbersome.

Presently, self-supervised learning (SSL) approaches are used to forego the need of costly manual annotations. In SSL the network is, in simple terms, taught representations by getting supervision from the data samples themselves. Various SSL techniques have been proposed, but the difficulty of DNNs to learn high-level and generic features instead of relying on local and spurious cues in the data is still a prevalent problem. For a network to learn *'better',* that is to say higher-level, representations, the current invention proposes that networks may must be arranged so as to look beyond local cues and instead to global semantic information. It is for the purpose of the invention postulated that the mammalian brain, in particular the human brain, is able to extract global semantic information with ease. This ability would be owing to pre-stored templates, or *'cognitive bias'.* Adding this prior knowledge into SSL methods can help enhance the generalization and robustness of the networks.

More specifically a goal of the invention is to enable the SSL to produce generic and high-level representations that can be used to support different downstream tasks. SSL, such as with prior learning, can here also be seen as the 'pretraining stage' for deep neural networks. In SSL unlabeled data is taken as input to train the deep neural network such that it learns generic representations. This trained network can be further used for classification or detection applications. In one example, the neural network according to the method of the invention may be provided to receive an image data stream of the camera of a vehicle, and wherein the neural network is able to produce generic and high-level representations within images of the data stream of said camera. To this end the vehicle may be arranged so as to transmit images to a distant server operating the neural network, or wherein the neural network is provided within an on-board computer of the vehicle. In such systems it may be particularly useful to attribute certain representations to an image. In one example the network may decide that an image represents a child. The more accurate recognition of such a distinction is beneficial as this further allows for an action, such as a warning or automatic braking, to be performed by the vehicles. To this end the vehicle would be a semi-autonomous or fully autonomous vehicle. Various SSL techniques have been proposed that continue to reduce the gap between supervised and self-supervised learning. These approaches are listed as follows:

1. Matthias Minderer, Olivier Bachem, Neil Houlsby, and Michael Tschannen. Automatic shortcut removal for self-supervised representation learning. In International Conference on Machine Learning, pp. 6927-6937. PMLR, 2020.
2. Joshua Robinson, Li Sun, Ke Yu, Kayhan Batmanghelich, Stefanie Jegelka, and Suvrit Sra. Can contrastive learning avoid shortcut solutions? Advances in Neural Information Processing Systems, 34, 2021.
3. Shlok Mishra, Anshul Shah, Ankan Bansal, Jonghyun Choi, Abhinav Shrivastava, Abhishek Sharma, and David Jacobs. Learning visual representations for transfer learning by suppressing texture. arXiv preprint arXiv:2011.01901, 2020.
4. Songwei Ge, Shlok Mishra, Chun-Liang Li, Haohan Wang, and David Jacobs. Robust contrastive learning using negative samples with diminished semantics. Advances in Neural Information Processing Systems, 34, 2021.
5. Gowda, Shruthi, Bahram Zonooz, and Elahe Arani. "InBiaseD: Inductive Bias Distillation to Improve Generalization and Robustness through Shape-awareness". Conference on Lifelong Learning agents (CoLLAs 2022)
6. Irwin Sobel and Gary Feldman. A 3x3 isotropic gradient operator for image processing. a talk at the Stanford Artificial Project in, pp. 271-272, 1968. However, the approaches still show disparity with humans on what they focus on to create representations.

To the above end the invention proposes a computer-implemented method comprising utilizing implicit information already existing within data, such as a data stream, to enhance the representation capability.

According to a first aspect of the invention there is provided a method comprising the steps of:

(i) providing input images;

(ii) extracting implicit shape information from the input images; and

(iii) performing self-supervised learning on at least two deep neural networks based on the provided input images (x) and the at least one extracted implicit shape information for enabling said at least two deep neural network to classify and/or detect objects within other input images, such as in a separate application after the self-supervised learning is completed. This could be any one of road condition monitoring, road signs detection, parking occupancy detection, defect inspection in manufacturing, insect detection in agriculture, aerial survey and imaging and many more.

Beneficially, step (iii) can be performed by a base Siamese network designed for processing mutually different input image views derived from the same input images. This allows the same pretrained encoder to be used for mutually different downstream purposes, and allows in one example for both classification and object detection. Performing self-supervised learning within two mutually different views of the input image, while also providing supervision from the prior knowledge (shape) data from the prior network reduces overfitting to local trivial solutions and helps generate high level representations.

Further beneficially, the base Siamese network may comprise a plurality of first encoders ($f(\theta)$) and a second encoder ($f'(\theta)$), wherein the second encoder ($f'(\theta)$) is fed an image view transformed by the extracted implicit shape information, and wherein the plurality of first encoders are fed the mutually different input image views and wherein the plurality of first encoders the second encoder are convolutional neural networks. This allows for symmetric and asymmetric updates of the Siamese network and beneficially enforces the network to learn to incorporate the global semantic information found within the images.

In yet another example parameters, such as coefficients, of the Siamese network can be updated asymmetrically, in a way that the network parameters of the Siamese network are updated for one augmented input image view, while considering the features of another augmented input image view as the target.

Additionally and/or alternatively, a Sobel filter can be used for extracting implicit shape information from the input images.

In a more specific example the method may comprise the use of a first predictor downstream of one encoder of the plurality of first encoders and a second predictor downstream of the second encoder, and wherein optionally extracting implicit shape information comprises the use of a Kullback-Leibler divergence between predictor outputs of the first and second predictors.

In yet another example, negative cosine similarity can be used as a similarity objective function, and a Simsiam SSL loss is then used to calculate the losses received by each of the plurality first encoders, and wherein the losses are combined to formulate a symmetric loss using stop gradients.

According to a second aspect of the invention there is provided a data processing apparatus comprising means for carrying out the method according to the first aspect of the invention.

According to a third aspect of the invention there is provided a computer program product comprising instructions which, when the program is executed by a computer, cause the computer to carry out the method according to the first aspect of the invention.

According to a fourth aspect of the invention there is provided an at least partially autonomous driving system comprising at least one camera designed for providing a feed of input images, and a computer designed for classifying and/or detecting objects using a deep neural network, wherein said deep neural network has been trained using a self-supervised learning method according to the first aspect of the invention.

Beneficially, the network can be designed for outputting driver responses, such as breaking, for piloting the system in response to a predefined classification and/or detection within the feed of images.

To further elucidate the invention a detailed description is provided below which follows technical figures:

Fig.1    schematically shows the architecture of an SSL-prior trained network;
Fig.2    schematically shows the inversion of the stop gradient with the architecture according to Figure 1; and
Fig.3    schematically shows downstream applications of a trained deep neural network f;

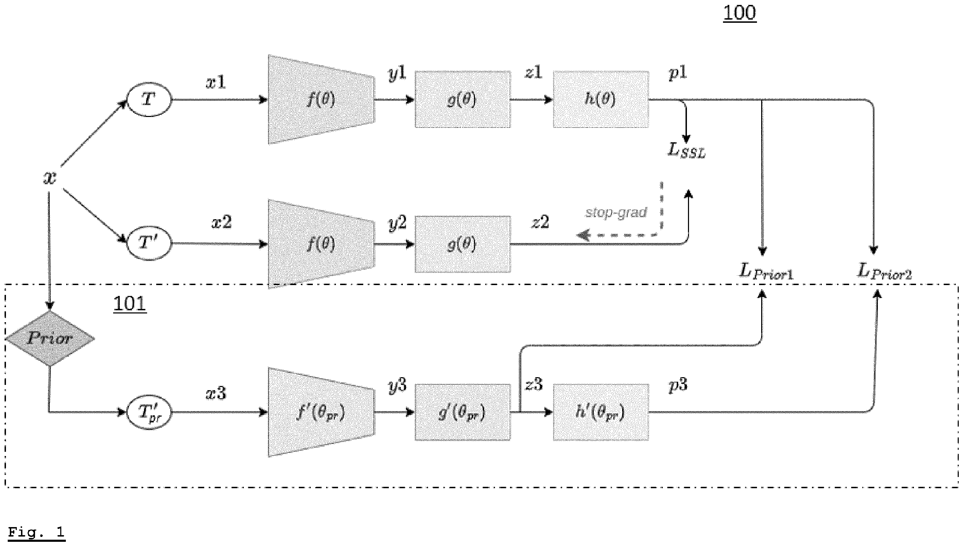

The invention proposes an approach to integrate prior knowledge into the self-supervised training framework to propel the deep neural networks to learn better representations, in particular shape. It is noted that representations here are semantically meaningful representations that can constitute detecting the type of environment, such as a road environment (highway, interstate, rural, or residential), whether a road is busy, but also detecting objects within an image, such as pedestrians, cyclists, vehicles, and even type of vehicles and even between images of the image is part of an image stream, the direction of movement relative to the perspective of a camera providing the image stream. In figure 1 a training domain 100 is shown. The network being trained is here shown as a first encoder f. The first encoder $f$ is shown multiple times within the same domain, which is a characteristic of a base Siamese network. Network $f$ is trained via SSL and further used in downstream tasks, such as classification and object detection. The networks $f$ help enrich the representations learnt and aid in better generalization and robustness in the downstream tasks. The domain 100, also called the architecture of 'SSL-Prior' consists of such a base Siamese network. Siamese networks are a class of neural network architecture that contains multiple identical networks. Identical here means that network *f* actually constitutes a plurality of networks *f* sharing the same configuration and parameters, but process two different inputs. These can therefore be used to find similarities between mutually different inputs. In this method the input *x* is augmented so as to produce three different image views *x1, x2, x3,* two of which x1 and x2 are each fed as input to the first encoders *f* and the third *x3* is fed to the second encoder *f'*. It can be seen from Figure 1 that the architecture 100 also comprises a projector *g* associated with each of the first encoders *f* which is designed to project the output *y1* of one view to match the output *y2* of another view. The predictor h further helps the projections adapt better to the representations of the other view. This objective between similar images, but with different data transformations, helps the network learn representations of the image.

Given a sample of input images *x*, the present invention creates augmented views of the input images by applying augmentations, also known as transformations. *T* and *T'* are augmentations from a set of augmentations. It is noted that the term *f(θ)* is simply *f* using *x1, x2* as input.

SSL used an extensive set of augmentations to induce invariances. These augmentation comprise randomized cropping of the input images, a randomized change of brightness, contrast and/or saturation of an image, a randomized adjustment of the grayscale of the input images, and a random horizontal flipping of the image. While training is improved, the invention proves effective even with just randomized cropping and randomized flipping of the image only. In essence the above are exampled for different input images to be derived from the same input images through randomized augmentation.

As to Figure 1, *T* and *T'* are applied to input *x* to produce the views *x1* and *x2*. *x1 = T(x); x2 = T'(x)*, thus representing mutually different random transformations of the original input images x.

To recapitulate. In Figure 1, the architecture 100 comprises first encoders *f,* which are convolutional neural networks (CNNs). Also separate from this example the first and second encoders are themselves designed according to a standard Resnet-18 architecture. The projector associated with the first encoder *g* is a 2-layer multilayer perceptron (MLP) network comprising two Batch norm layers. The predictor h is also a 2-layer MLP with one batch norm layer. The prior framework 101 has a setup with a second encoder *f'*, a projector *g'* and a predictor *h'*.

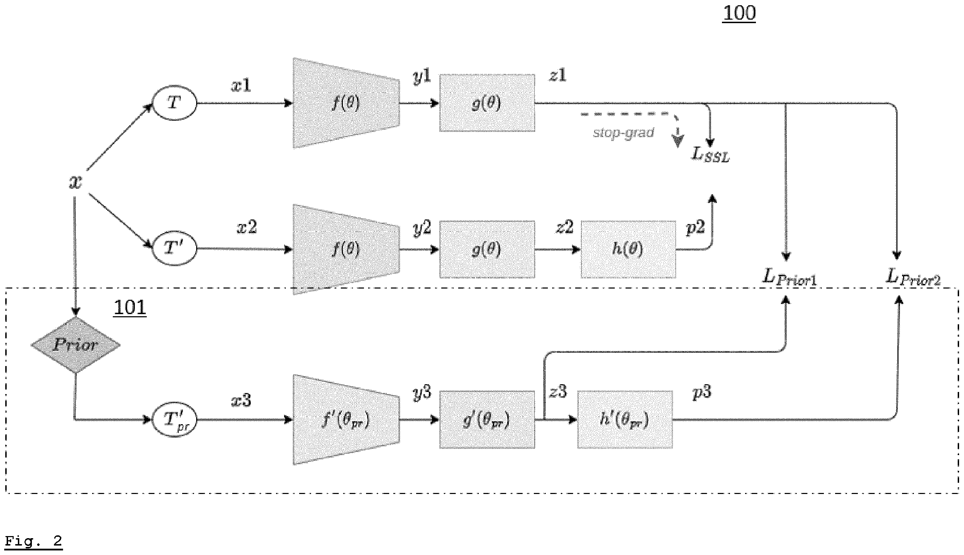

In Figure 2 the same architecture 100 as show in Figure 1. The only difference is that the predictor *h* is used downstream of a mutually different first encoder *f,* with respect to Figure 1. In other words, the architecture allows for asymmetric updates in reversible direction. Also separate from this example. In this manner a symmetric loss for the self-supervised learning $L_{SSL}$ can be determined for the sum of the asymmetric updates. More in detail below:

According to Figure 1

The Encoder outputs for the two augmented views are :

$$y1 = f(x1; \theta) \text{ and } y_2 = f(x_2; \theta);$$

$$\text{The projector output} : z_2 = g(y_2; \theta)$$

$$\text{and the predictor output} : p_1 = h(z_1; \phi)$$

$$D(p_1, z_2) = -\frac{p_1}{\|p_1\|} \cdot \frac{z_2}{\|z_2\|}$$

According to Figure 2

$$\text{The projector output} : z_1 = g(y_1; \theta)$$

$$\text{and the predictor output} : p_2 = h(z_2; \phi)$$

$$D(p_2, z_1) = -\frac{p_2}{\|p_2\|} \cdot \frac{z_1}{\|z_2\|}$$

The asymmetric losses can be combined to from $L_{SSL}$:

$$L_{SSL} = \tfrac{1}{2}D(p_1, z_2) + \tfrac{1}{2}D(p_1, z_2)$$

More generically the function can be written as follows:

$$\mathcal{L}_{ssl} = \sum_{i,j \in \{1,2\}; j \neq i} \frac{p_i}{\|p_i\|} \cdot \frac{z_j}{\|z_j\|}$$

To induce the prior knowledge, the present invention aims to train the second encoder network *f'*, by utilizing the shape or the global semantic information. It is possible to extract the implicit shape information to generate the prior image $x_{pr}$. The architecture 100 thus applies a prior transformation to produce $x_{pr}$.

In one example a Sobel filter can be chosen for the prior, that is to say for the second encoder. The algorithm of the Sobel filter is explained below:

---

**Algorithm 1** Sobel Edge Detection Algorithm

---

**Input:** Input image $X$

1: Up-sample the images to twice the original size: $I = \text{Upsample}(X)$

2: Apply Gaussian smoothing to reduce noisy edges: $I_b = \text{Gaussian\_Blur}(I, kernel\_size = 3)$

3: Get Sobel kernels: $G_x = \begin{bmatrix} -1 & 0 & +1 \\ -2 & 0 & +2 \\ -1 & 0 & +1 \end{bmatrix}$ and $G_y = \begin{bmatrix} -1 & -2 & -1 \\ 0 & 0 & 0 \\ +1 & +2 & +1 \end{bmatrix}$

4: Apply Sobel kernels: $I_{dx} = I_b * G_x$ and $I_{dy} = I_b * G_y$

   where $*$ here denotes the 2-dimensional signal processing convolution operation

5: The edge magnitude: $I_{shape} = \sqrt{I_{dx}^2 + I_{dy}^2}$

6: Down-sample to original image size: $I_{shape} = \text{Downsample}(I_{shape})$

---

In the Sobel filter the input images are up-sampled to twice their original size, gaussian smoothing is applied, Sobel kernels are applied to the up-sampled images (denoting 2-dimensional signal processing in a convolution operation), a magnitude of an edge of objects within the image is determined, and the images are down-sampled to the original image size.

In the flow diagram, or architecture 100 according to both Figures 1 and 2 a transformation T is applied to $x_{pr}$

$x3 = T'pr(x_{pr})$

In other words, also separately from this example, $x_{pr}$ is used to produce x3 via transformation $T'_{pr}$.

*T'* here being $T'_{pr}$ One network looks at the original images (texture) x, albeit with its own randomized augmentations *x1*, x2, while other network focuses on the semantic information. Training these two networks in synchrony with aligning objective functions will reduce overfitting and encourage the network to explore the latent space to produce generic representations.

The prior network produces representations rich in shape and we use this to supervise the network.

Optionally, yet with some preference, the invention can employ two different losses to induce shape supervision into the network.

First (i) is the negative cosine similarity D to maintain consistency between original and the shape aware feature representations. This beneficially allows the shape view to regularize the representations and enforce the network to learn to incorporate the global semantic information. The SSL prior loss is also an asymmetrical loss and is given as:

$$L_{Prior1} = \tfrac{1}{2}D(p_1, z_3) + \tfrac{1}{2}D(p_3, z_1)$$

$$L_{Prior1} = \sum_{i,j \in \{1,pr\}; j \neq i} \frac{p_i}{\|p_i\|} \cdot \frac{z_j}{\|z_j\|}$$

Secondly (ii) there may be added an additional loss to distil the shape knowledge by employing a Kullback-Leibler divergence (KL loss) between the predictor outputs. KL divergence is used in literature to measure the difference between two probability distributions over the same variable. As this is done in the prediction space, the distributions can be aligned to further guide the network to make decisions that are less susceptible to trivial shortcut cues.

$$L_{Prior2} = \mathcal{D}_{KL}(\mathrm{softmax}(p_1)\|\mathrm{softmax}(p_2))$$

The complete Prior loss is the sum of both the prior losses:

$$\mathcal{L}_{ssl-prior} = \mathcal{L}_{Prior1} + \lambda_{pr}\mathcal{L}_{Prior2}$$

The overall loss is the combination of the self-supervised loss and the prior knowledge loss. The SSL loss learns invariant representations between two views of standard images while the SSL-Prior loss regularizes and supervised the training to focus on the relevant, semantic and meaningful features, to move towards a biologically plausible representation learning.

$$\mathcal{L} = \mathcal{L}_{ssl} + \lambda\mathcal{L}_{ssl-prior}$$

A and $\lambda_{pr}$ are the loss balancing factors.

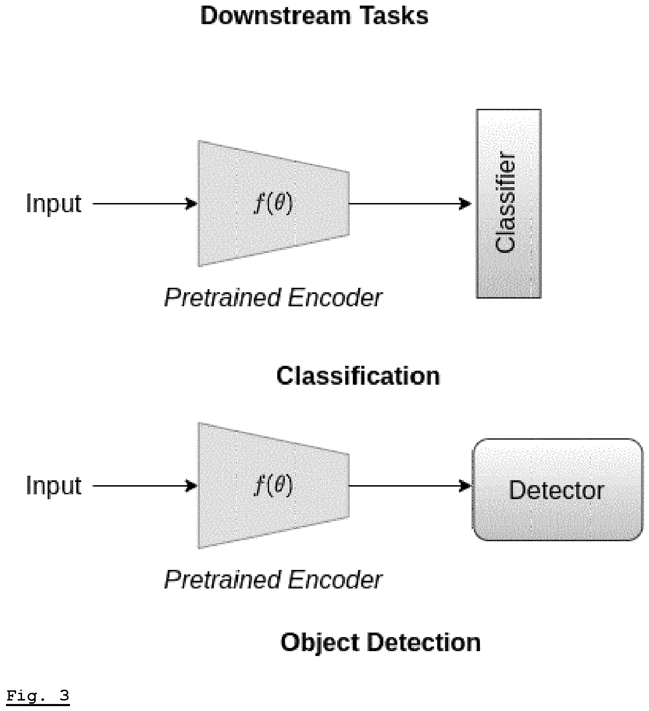

Figure 3 shows downstream applications of pre-trained networks f using the method of the invention.

Lastly, it is mentioned that psychophysical experiments have shown that networks rely on texture while humans focus more on global semantic information. But reliance on spurious cues leads to shortcut learning, which is a challenging problem that is also prevalent in SSL settings. Reliance of networks on shortcuts, that are trivial cues in training data but that do not translate to other settings, results in lower generalization performance. This simplicity bias presents a challenge even in the SSL. Moreover, all the SSL techniques rely on an extensive set of augmentations to enforce multiple invariances into the learned representations and the augmentations can be viewed as a double-edged sword, that and can be beneficial or detrimental depending on the downstream application.

To learn better representations, the invention aims to guide networks to look beyond the local cues to generate high level and meaningful representations. The cognitive bias or the pre-stored template in the brain aids in this task. This prior is implicit and can add supervision to enable taking accurate decisions. The present invention thus aims to enable SSL to be more biologically plausible to result in better representations.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

**Claims**

1. A computer-implemented method for instilled shape awareness supported self-supervised learning domain (100) for deep neural networks, the method comprising the steps of:

   (i) providing input images (x);
   (ii) extracting implicit shape information from the input images; and
   (iii) performing self-supervised learning on at least two deep neural network based on the provided input images (x) and the at least one extracted implicit shape information for enabling each of said at least two deep neural networks to classify and/or detect objects within other input images, such as in a separate application after the self-supervised learning is completed.

2. The method according to claim 1, wherein the at least two deep neural networks are designed as a base Siamese network, and wherein step (iii) is performed by said base Siamese network designed for processing mutually different input image views derived from the same input images through randomized augmentation.

3. The method according to claim 2, wherein the base Siamese network comprises a plurality of first encoders (f) and a second encoder (f'), wherein the second encoder (f') is fed an image view ($x_3$) transformed by the extracted implicit shape information, and wherein the plurality of first encoders are fed the mutually different input image views ($x_1$, $x_2$) and wherein the plurality of first encoders and the second encoder are convolutional neural networks.

4. The method according to claim 2 or 3, wherein parameters, such as coefficients, of the Siamese network are updated asymmetrically, in a way that the network parameters of the Siamese network are updated for one augmented input image view, while considering the features of another augmented input image view as the target.

5. The method according to any one of claims 1-4, wherein a Sobel filter is used for extracting implicit shape information from the input images.

6. The method according to claim 3 and 5, wherein the method comprises the use of a first predictor (h) downstream of one encoder of the plurality of first encoders (f) and a second predictor (h') downstream of the second encoder (f'), and wherein optionally extracting implicit shape information comprises the use of a Kullback-Leibler divergence between predictor outputs (p1, p2) of the first and second predictors (h, h').

7. The method according to claim 4 and 6, wherein a negative cosine similarity (D) is used as a similarity objective function, and a Simsiam SSL loss is used to calculate the losses received by each of the plurality first encoders (f), and wherein the losses are combined to formulate a symmetric loss using stop gradients.

8. The method according to at least claim 6 or 7, wherein a method architecture (100) is chosen so that an overall loss for the training of a deep neural network using the method is the combination of a self-supervised loss and the prior knowledge loss.

9. A data processing apparatus comprising means for carrying out the method of any one of claims 1-8.

10. A computer program product comprising instructions which, when the program is executed by a computer, cause the computer to carry out the method of any one of claims 1-8.

11. An at least partially autonomous driving system comprising at least one camera designed for providing a feed of input images, and a computer designed for classifying and/or detecting objects using a deep neural network (f), wherein said deep neural network has been trained using a self-supervised learning method according to of claims 1-8.

**12.** The system according to claim 11, wherein the driving system is designed for outputting driver responses, such as breaking, for piloting the system in response to a predefined classification and/or detection within the feed of images by the deep neural network (f).

100

101

Fig. 1

Fig. 2

# Downstream Tasks

**Classification**

**Object Detection**

Fig. 3

Europäisches
Patentamt

European
Patent Office

Office européen
des brevets

# EUROPEAN SEARCH REPORT

Application Number

EP 22 19 2012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XINLEI CHEN ET AL: "Exploring Simple Siamese Representation Learning", ARXIV.ORG, CORNELL UNIVERSITY LIBRARY, 201 OLIN LIBRARY CORNELL UNIVERSITY ITHACA, NY 14853, 20 November 2020 (2020-11-20), XP081818863, * page 1 - page 3; figure 1 * ----- | 1-12 | INV. G06N3/045 G06N3/0464 G06N3/084 G06N3/0895 |
| Y | SHRUTHI GOWDA ET AL: "InBiaseD: Inductive Bias Distillation to Improve Generalization and Robustness through Shape-awareness", ARXIV.ORG, CORNELL UNIVERSITY LIBRARY, 201 OLIN LIBRARY CORNELL UNIVERSITY ITHACA, NY 14853, 12 June 2022 (2022-06-12), XP091245567, * page 1 - page 2; figure 1 * ----- | 1-12 | |

TECHNICAL FIELDS
SEARCHED      (IPC)

G06N

The present search report has been drawn up for all claims

| Place of search | Date of completion of the search | Examiner |
|---|---|---|
| The Hague | 13 June 2023 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                               

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Automatic shortcut removal for selfsupervised representation learning. **MATTHIAS MINDERER ; OLIVIER BACHEM ; NEIL HOULSBY ; MICHAEL TSCHANNEN.** International Conference on Machine Learning. PMLR, 2020, 6927-6937
- **JOSHUA ROBINSON ; LI SUN ; KE YU ; KAYHAN BATMANGHELICH ; STEFANIE JEGELKA ; SUVRIT SRA.** Can contrastive learning avoid shortcut solutions?. *Advances in Neural Information Processing Systems,* 2021, vol. 34
- **SHLOK MISHRA ; ANSHUL SHAH ; ANKAN BANSAL ; JONGHYUN CHOI ; ABHINAV SHRIVASTAVA ; ABHISHEK SHARMA ; DAVID JACOBS.** Learning visual representations for transfer learning by suppressing texture. *arXiv:2011.01901,* 2020
- **SONGWEI GE ; SHLOK MISHRA ; CHUN-LIANG LI ; HAOHAN WANG ; DAVID JACOBS.** Robust contrastive learning using negative samples with diminished semantics. *Advances in Neural Information Processing Systems,* 2021, vol. 34
- **GOWDA, SHRUTHI ; BAHRAM ZONOOZ ; ELAHE ARANI.** InBiaseD: Inductive Bias Distillation to Improve Generalization and Robustness through Shape-awareness. *Conference on Lifelong Learning agents (CoLLAs,* 2022
- **IRWIN SOBEL ; GARY FELDMAN.** A 3x3 isotropic gradient operator for image processing. *Stanford Artificial Project,* 1968, 271-272